# EUROPEAN PATENT SPECIFICATION

(11) **EP 0 345 987 B1**
(45) Date of publication and mention of the grant of the patent: **18.09.1996**
(21) Application number: 89305444.5
(22) Date of filing: 31.05.1989
(51) Int. Cl.: B29C 47/06, B29C 47/56

(54) **Methods of making multiple layer sheet materials, methods of processing polymers, extrusion apparatus, polymeric sheet materials and packaging made therefrom**
Verfahren zum Herstellen von mehrschichtigen Folienmaterialien, Verfahren zur Verarbeitung von Polymeren, Extrusionsvorrichtung, polymerisches Folienmaterial und hiermit hergestellte Verpackung
Procédés de fabrication de matériaux multicouches en feuille, procédés de traitement de polymères, dispositif d'extrusion, matériaux polymères en feuilles et emballage obtenu à partir de ceux-ci

(30) Priority: 09.06.1988 US 204485
(43) Date of publication of application: 13.12.1989
(73) Proprietor: AMERICAN NATIONAL CAN COMPANY, Chicago, Illinois 60631 (US)
(72) Inventor: Blemberg, Robert John, Neenah Wisconsin 54915 (US)
(74) Representative: MacGregor, Gordon

(56) References cited:
- BE-A- 671 304
- DE-A- 1 948 442
- DE-A- 2 554 239
- FR-A- 1 489 598
- FR-A- 2 154 579
- US-A- 2 674 007
- US-A- 4 533 510
- US-A- 4 804 510
- PATENT ABSTRACTS OF JAPAN, vol. 12, no. 39 (M-665)[2886], 5th February 1988; & JP-A-62 191 120 (TOSHIBA MACH. CO., LTD) 21-08-1987

## Description

The present invention relates to methods of making multiple layer sheet materials, methods of processing polymers; extrusion apparatus, polymeric sheet materials and packaging made therefrom.

More particularly, this invention relates to novel methods for fabricating multiple layer polymeric sheet materials to novel apparatus used in practising the methods as well as to the sheet materials per se, and to packages made with those sheet materials.

Referring especially to the problem addressed by the invention disclosed herein, vinylidene chloride copolymers (VDC) are preferred for their barrier properties to transmission of moisture vapor and oxygen.

It is commonly known that the extrusion of VDC copolymers is accompanied by various problems relating to the sensitivity of VDC copolymers to the combination of high temperature in contact with hot metal, and the time for which this high temperature contact must be maintained in the extrusion process.

Thus, the extrusion of VDC copolymers to produce sheet materials has conventionally been accomplished by keeping the extrusion apparatus as close as possible to the die, or die feedblock, in order to minimize the time during which the VDC copolymer is exposed to the hot metal surfaces of the processing equipment. Accordingly the positioning of the VDC extruder as close as possible to the die or die feedblock has more-or-less been required by this sensitivity of the VDC copolymer to the length of time during which it is exposed to the high temperature metal surfaces of the processing equipment.

Further, it is known to coextrude layers of, for example, polyethylene on either side of a VDC copolymer layer and then to strip off the polyethylene layers, thus to fabricate single layer VDC copolymer film. Such a proces, of course, provides a degree of protection for the VDC copolymer during the extrusion processing, by interposing the polyethylene between the hot metal surfaces of the die and the VDC copolymer.

It is also known to coextrude layers of other polymers with VDC copolymers, for example ethylene vinyl acetate copolymer (EVA). However, as additional layers are added to the coextrusion, additional space is required near the die to accommodate the additional equipment, such as extruders, mixers, transfer piping, die adapters, and the like. With anything more complex than fabrication of a simple 3-layer sheet, the area around the die can become quite congested. In arranging an equipment layout, and with all the polymer melt streams converging on the die, the space immediately adjacent the die is quite valuable. Thus the more versatility the layout designer has in arranging the space layout, the greater the opportunity for achieving efficiency in that layout.

Yet for coextrusions containing VDC copolymer, the VDC extruder has conventionally been positioned very close to the die equipment, as indicated above, thus precluding the layout designer from choosing to use that space for anything else.

It is an object of this invention to provide a method for fabricating multiple layer sheet materials containing heat sensitive polymers such as, but not limited to VDC copolymers, while preserving the choice of where to locate the extruder which processes the sensitive polymer.

It is another object to provide improved apparatus for so fabricating such sheet materials.

The invention aims to provide such apparatus and methods economically, wherein the equipment is readily fabricated at economical cost.

The invention also seeks to provide combinations of equipment to carry out the methods of the invention, in fabrication of sheet materials, and packages made therewith.

German Patent Application No. DE-P-1948442.5 discloses a co-extrusion process and apparatus for producing multi-layer sheets and tapes of thermoplastic resins. It is stated that uniform thickness of extruded layers is not achieved, but that this is not an important problem. The only means of controlling the relative thickness of the layers disclosed is to vary the rate of output of the extruders.

Japanese Patent Application No. JP 191120 discloses co-extrusion apparatus which can be used to alter the number of layers in the multi-layer sheet produced.

According to the invention, there is provided a method for producing a plurality of coextruded film structures with an extrusion apparatus, comprising:
(a) producing a first film structure by (i) plasticating a first sensitive polymeric composition in a first plasticating apparatus and producing a first polymeric melt stream, (ii) plasticating a second, less-sensitive polymeric composition in a second plasticating apparatus and producing a second polymeric melt stream, (iii) encapsulating the first melt stream in the second melt stream to create a first composite melt stream, (iv) feeding the first composite melt stream to a first manifold in a multi-manifold die, through a transport means connected to the first manifold, whereby the first film structure is produced at the multi-manifold die; characterised in that the transport means has a length/inner cross-section ratio of at least 4/1 so as to reduce any thickness variations of at least 10% in the second melt stream about the circumference of the combined melt streams, and in that the method further comprises
(b) shutting down production of the first film structure;
(c) disconnecting the transport means from the first manifold of the die, and connecting it to a second manifold of the multi-manifold die, without moving the first plasticating means; and
(d) producing a second film structure by (i) plasticating a sensitive polymeric composition in the first plasticating apparatus and producing a first polymeric melt stream, (ii) plasticating a second less-sensitive polymeric composition in a second plasticating apparatus and producing a second polymeric melt stream, (iii) encapsulating the first melt stream in the second melt stream to create a second composite melt stream, (iv) feeding the second composite melt stream to the second manifold in the multi-manifold die, through the transport means, whereby the second film structure is produced at the multi-manifold die, the compositions of the layers in the second film structure differing from the compositions of corresponding layers in the first film structure.

An account of various aspects of the invention will now be given, by way of example only, in the following non-limitative description.

Certain embodiments of the invention comprise methods of fabricating a multiple layer sheet material. The first step of these methods comprises plasticating a first vinylidene chloride copolymer composition in extrusion apparatus and thereby forming a first polymer melt stream having a first viscosity. The first polymer melt stream is then annularly encapsulated in a second polymer melt stream having a second viscosity lower than the first viscosity by at least about 20 percent, in terms of poise, to thereby form a two layer composite melt stream, with the second melt stream forming a continuous layer about the circumference of, and positioned outwardly of, the first melt stream. The first melt stream of vinylidene chloride copolymer is thus completely enclosed by the second melt stream. The encapsulated composite melt stream is then fed into and through a transfer pipe of sufficient length and circumferential symmetry to reduce any thickness variations of at least about 10% in the second melt stream about the circumference of the composite melt stream, by at least about 50%.

Preferably the transfer pipe feeds the composite melt stream into and through an extrusion die.

Also preferably, the recited annularly encapsulating comprises passing the first melt stream through a central bore in a crosshead mandrel, and distributing and applying the second melt stream outwardly of the first melt stream, through an outwardly disposed annular channel in the crosshead mandrel.

In preferred embodiments of this invention, the composite melt stream is fed to a die adapted for fabricating a non-annular article, for example a flat sheet.

In other, and related, embodiments, the invention comprises methods of fabricating a multiple layer sheet material. The first step of the methods comprise plasticating a first polymer composition in extrusion apparatus and thereby forming a first polymer melt stream. The first polymer melt stream is then passed through a central bore in a crosshead mandrel and encapsulated in a second polymer melt stream by distributing and applying the second melt stream outwardly of the first melt stream, through an outwardly disposed annular channel in the crosshead mandrel. There is thereby obtained a composite melt stream comprising the first melt stream as its core with the second melt stream forming a continuous layer about the circumference of, and positioned outwardly of, the first melt stream. The encapsulated composite melt stream is then fed into and through an extrusion die.

Preferably the second melt stream has a viscosity lower than the viscosity of the first melt stream by at least about 20 percent, and the method includes feeding the composite melt stream to the extrusion die through a transfer pipe of sufficient length and symmetry to reduce any thickness variations of at least about 10% in the second melt stream about the circumference of the composite melt stream, by at least about 50%.

In those embodiments using a crosshead mandrel encapsulator, the crosshead mandrel typically produces a weld line in the second melt stream. The invention comprehends angularly orienting the location of feeding of the second melt stream into the crosshead mandrel, and relative to a non-annular die, such that the weld line passes through the die in an orientation advantageous for trimming off the weld line in a process subsequent to fabrication of the polymer article.

In some embodiments, the die comprises a slot die for fabricating sheet material, and the location of feeding of the second melt stream into the crosshead mandrel is angularly oriented, relative to the die, such that the weld line passes through the die in an orientation advantageous for trimming off the weld line during normal trimming off of the edge of the film sheet.

The encapsulation of the first polymer melt stream is preferably carried out as close as possible to the extrusion apparatus which produces the first polymer melt stream. Thus the encapsulating means is preferably attached to the extrusion apparatus, and the first melt stream is fed directly from the extrusion apparatus to the encapsulating means. The time that the first polymer melt stream is exposed to metal surfaces is thus minimized.

In those embodiments where the transfer pipe is utilized, it provides for flexibility in positioning the extrusion apparatus for the first melt stream, as well as reducing any thickness variations in the second melt stream about the circumference of the composite.

The invention also contemplates novel apparatus for fabricating polymeric articles with first and second melt streams. The apparatus comprises first and second extruders for plasticating first and second polymer compositions and producing first and second polymeric melt streams, and a die for molding the polymer melt streams into shapes. Between (i) the first and second extruders and (ii) the die, there is an encapsulation means comprising a central mandrel having a central bore, and a surrounding sleeve about the central mandrel, and including an annular crosshead channel between the central mandrel and the sleeve. The encapsulation means is adapted for (i) receiving the first polymer melt stream in, and passing the first polymeric melt stream through, the central bore and for (ii) receiving the second polymeric melt stream in the channel and forming an annular layer of the second polymeric melt stream about the first polymeric melt stream.

In preferred embodiments, the apparatus includes a transfer pipe between the adapter and the die, the transfer pipe being of sufficient length and symmetry to reduce any thickness variations of at least 10% in the second melt stream about the circumference of the combined melt streams, but at least about 50%, where the viscosity of the second melt stream is less than the viscosity of the first melt stream by 20 percent.

Also in preferred embodiments, the encapsulation means is mounted to the first extruder.

The invention comprehends novel sheet materials made with the apparatus and methods of the invention, and packages made with the sheet materials. The sheet materials are up to 0.100 inch thick, preferably up to about 0.060 inch, most preferably up to about 0.020 inch.

The invention will now be described in more detail, by way of example only, with reference to the accompanying drawings, in which:
FIGURE 1 shows a pictorial view of equipments and process using this invention.
FIGURE 1A shows a more typical equipment layout, which uses several extruders and illustrates the typical problem of congestion around the die.
FIGURE 2 shows a longitudinal cross-section of the encapsulator, and is taken at 2-2 of FIGURE 1.
FIGURE 3 shows a transverse cross-section of the encapsulator, and is taken at 3-3 of FIGURE 1.
FIGURES 4, 4A, and 4B are taken at 4-4 of FIGURE 1, and show exaggerated examples of non-concentricity in the composite encapsulated polymer melt stream as it leaves the encapsulator.
FIGURE 5 is taken at 5-5 of FIGURE 1, and illustrates the achievement of concentricity in the composite polymer melt stream in a sufficiently long transfer pipe.
FIGURE 6 is taken at 6-6 of FIGURE 1, and shows an exaggerated cross-section of a sheet material fabricated in this invention.
FIGURE 7 shows a pictorial view of a pouch made with flexible sheet material made according to the invention.

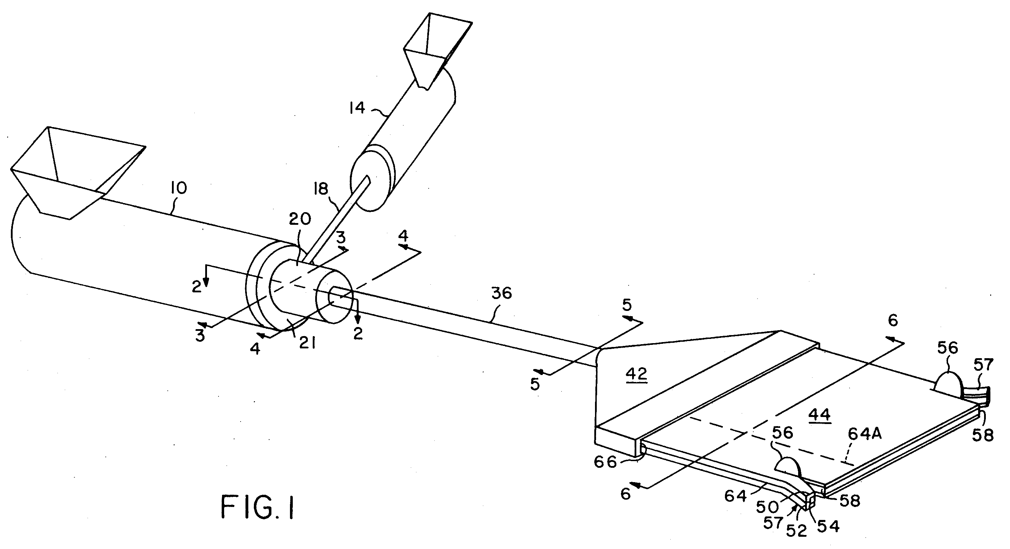

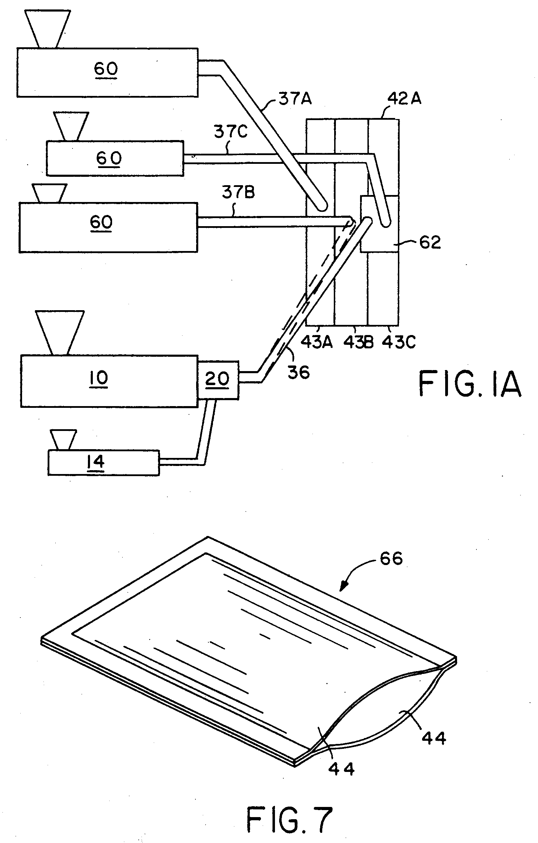

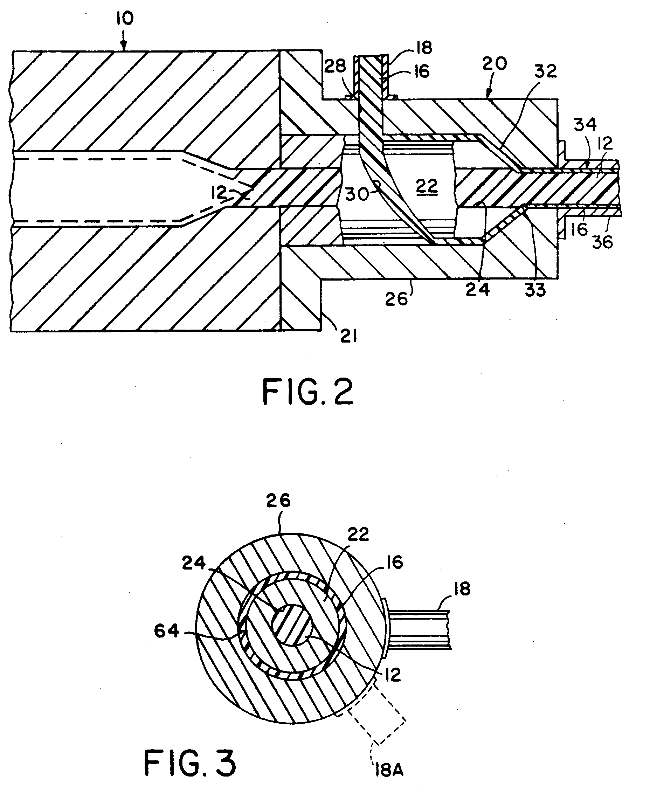

Referring to FIGURE 1, a first extruder 10 plasticates a representative first polymeric composition of vinylidene chloride copolymer and produces a first polymeric melt stream 12, seen in FIGURE 2. A second extruder 14 plasticates a second polymeric composition and produces a second polymeric melt stream 16 and delivers it, through a connecting conduit 18 to an encapsulator 20 which is mounted to first extruder 10 by means of a flange 21 and appropriate connectors.

The encapsulator 20 comprises a central crosshead mandrel 22 having a central bore 24 which receives the first melt stream 12 from the first extruder 10. Encapsulator 20 further comprises a sleeve 26 surrounding the central mandrel 22. The sleeve 26 has an inlet 28 for passage of the second polymeric melt stream 16 into the encapsulator 20. The passage 28 leads to a crosshead channel 30 having a tapering cross-section about the circumference of mandrel 22. The second channel 30 distributes polymer melt stream 16 about the circumference of mandrel 22 and between the mandrel 22 and sleeve 26. Channel 30 leads to an annular channel 32 which has a cross-section more approaching a constant with respect to its circumference at any given point.

The annular channel 32 leads to a joinder 33 with the central bore 24, and delivers the second polymer melt stream 16 to the joinder in an annular configuration having a generally constant cross-section.

With both melt stream 12 and 16 being supplied by their respective extruders 10 and 14 in constant flows of the melt streams, melt stream 12 is thus encapsulated in melt stream 16. Consequently, a composite melt stream 34 is formed from the melt streams 12 and 16, wherein the second melt stream 16 forms a continuous outer layer about the circumference of the first melt stream 12. Thus, the first and second melt streams 12 and 16 maintain their individual identity and first melt stream 12 is completely enclosed by the second melt stream 16.

The composite melt stream 34 exits encapsulator 20 and enters a transfer conductor which is shown in the illustrated embodiment as a pipe 36. It is desirable that the encapsulating second melt stream 16 have a uniform thickness about the circumference of the composite melt stream 34 for reasons which will be explained more fully hereinafter.

The uniformity of the thickness of melt stream 16 which is delivered to the joinder 33 depends on a plurality of contributing factors. These include, for example, the structures of the crosshead channel 30 and the annular channel 32, the particular polymer composition, and the thermal processing history of the polymer being used. An encapsulator, and especially channels 30 and 32, could be designed for each different polymer and each different process to be used for each polymer. Thus, all the desired parameters might be controlled through the encapsulator

However, any change in the polymer or the process could require designing and building another encapsulator. To the extent that flexibility in processing and in polymer selection is desired, the time and cost of providing the plurality of encapsulators to meet such needs would adversely affect efficient operation of the process. Thus, while it is important that the melt stream 16 should have a uniform thickness about the circumference of the composite melt stream 34, it is also important that a single encapsulator 20 be useful for operations with a variety of polymers. Also, the operator needs a reasonable degree of freedom in the operation of both extruders 10 and 14, in order to achieve an efficient operation. As the operator makes processing adjustments in the operation whether, for example, by change of polymers or change of processing conditions with respect to melt stream 16, the rheology of the resulting melt stream 16 changes. As the rheology changes, so does the flow of melt stream 16 change about mandrel 22. As the flow of melt stream 16 about mandrel 22 changes, so can the distribution of material of melt stream 16 change about the circumference of mandrel 22.

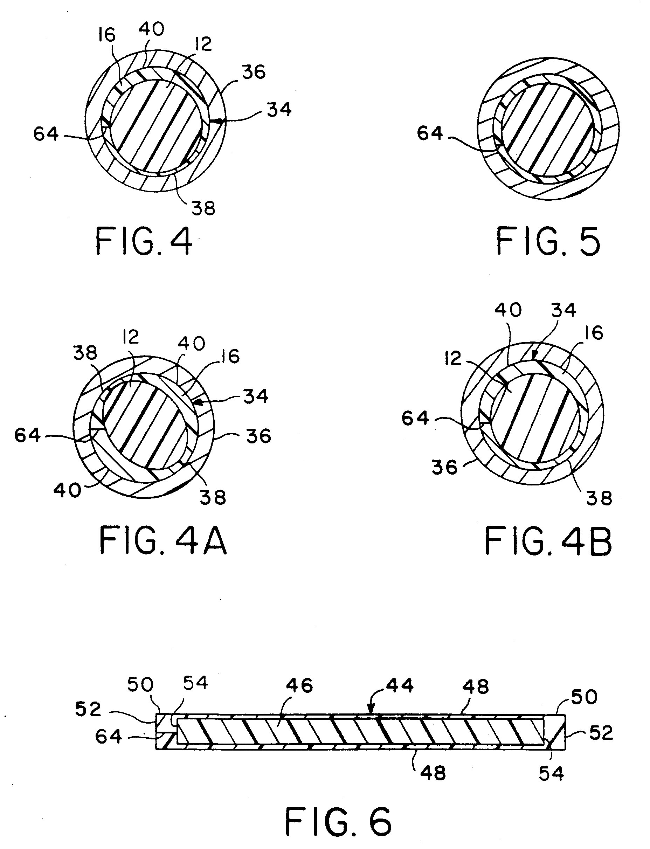

Thus, the material of melt stream 16 does not necessarily have a constant thickness about the circumference of the composite melt stream 34 as it enters the pipe 36, even though a constant thickness is desired. FIGURES 4, 4A and 4B illustrate three types of non-uniformity which may be encountered. In FIGURES 4 and 4B, the first melt stream 12 is generally circular, but is off-centered in pipe 36, such that the corresponding second melt stream 16 has one thin area 38 and one thicker area 40 at an opposing location on the circumference. In FIGURE 4A, the first melt stream is centered in the pipe 36, but is ovoid rather than circular. Correspondingly, the associated melt stream 16 has two thinner areas 38 and two thicker areas 40. Other illustrations of non-uniformity can, of course, be developed.

Returning now to FIGURE 1, it is seen that the transfer pipe 36 leads to a slot die 42 which converts the composite melt stream 34 into a flat sheet 44. The process of the invention is generally intended to be used for fabricating flexible packaging films, typically about 2 mils to about 10 mils (0.05 to 0.25 mm) thick. Thinner films may be made down to the normal minimum thicknesses generally fabricated using slot dies, such as about 0.25 to about 0.50 mil (6.4 x 10⁻³ to 0.013 mm). However, the minimum thickness limitation in the process herein is controlled by die design, which forms no part of this invention. Thus, as die designs improve for thinner films, this invention is expected to remain correspondingly useful.

Flexible packaging films do not normally exceed 20 mils (0.51 mm) thickness, so this is generally an upper practical limit for making flexible packaging films of this invention. However, thicker sectioned sheet materials may be used for applications requiring more rigid properties. For example, thermoformed trays and other products are conventionally fabricated from sheet material about 60 mils to about 75 mils (1.52 to 1.91 mm) in thickness, in some cases up to about 100 mils (2.54 mm) thickness. While thicker sheets may be made using the invention, the advantages of the invention are not so readily discernible therein.

FIGURE 6 shows a cross-section of a film 44 fabricated through the slot die 42. The thicknesses of all three layers in FIGURES 1 and 6 are greatly exaggerated relative to the width in order that the layers might be visibly illustrated. As seen in FIGURE 6, the film 44 has a central core layer 46 which is comprised of the first melt stream 12. The second melt stream 16 still totally encloses the first melt stream 12 which is now the core layer 46, and comprises top and bottom layers 48 and edge portions 50.

In order to produce a film having consistent and predictable properties, it is important that layers 48 be continuous and have a generally uniform thickness both longitudinally in the film, and transversely across the film sheet. Similarly, the widths of the two edge portions 50 between the film edges 52 and the corresponding edges 54 of the core layer 46 should be about equal, one with respect to the other, and should be the same along the length of the film so that cutting wheels 56 (Fig. 1) can be set for reliably cutting away trim portions 57 of a reasonable width while reliably and reproducibly producing a film in which the core layer 46 extends to both edges 58 of the trimmed film. Trim portions 57 include edge portions 50 as well as the outer edge portions of both edges of the core layer 46, i.e. extending from edges 54 toward the center of the sheet. Thus edge trim portions 57 include all of edge portions 50 plus a little of the edges of core layer 46, along with associated portions of top and bottom layers 48.

Conventional fluid flow mechanics indicates that the distribution of the polymer melt stream 16 in the fabricated film 44 is representative of the distribution of the thickness of melt stream 16 as it enters the die 42. Thus, in order to obtain the same thicknesses in the top and bottom layers 48, it is important that the top and bottom portions of the composite melt stream nesses in the outer encapsulating melt stream 16. A sheet made with, for example, the composite melt stream shown in FIGURE 4 would have a thicker top layer 48 and a relatively thinner bottom layer 48. In a sheet made with the melt stream of FIGURE 4A the top layer 48 would taper from thicker to thinner transversely across the film from right to left with respect to the direction seen in FIGURE 6. Correspondingly, the bottom layer 48 would taper in the opposite direction.

In a sheet made with the composite melt stream of FIGURE 4B, the thicknesses of the opposing edges 50 would be different; and the top and bottom layers ferent thicknesses, both of which would vary transversely across the sheet.

Thus, it is important that any variations of at least about 20%, preferably at least about 10%, in the thickness of melt stream 16 about the circumference of the composite melt stream 34 be reduced by at least 50%, preferably by at least 75%, and most preferably by at least 90% in magnitude, from the thickest portion of melt stream 16 to the thinnest portion.

We have surprisingly found that variations in the thickness of encapsulating melt stream 16 may be reduced when the viscosity of melt stream 16 under the conditions of operation is less than the viscosity of melt stream 12, by at least 20 percent, preferably by at least about 30 percent. Where the viscosities of the melt streams 12 and 16 are accordingly different, we have surprisingly discovered that variations in the thickness of melt stream 16 can be reduced by passing the composite melt stream through a transport conductor having a symmetrical cross-section and a sufficient length. A typical transport conductor is the round transfer pipe 36 shown in FIGURE 1. Other shapes are acceptable so long as they are symmetrical.

Given the viscosity differences required, the length of the transport conductor which is needed to effect the desired reduction in thickness variations is further a function of the cross-section of the transport conductor, both its shape and its size. For a round pipe as seen at 36 in FIGURE 1, the required length is a function of the diameter, and can be expressed as a ratio of the length to the diameter (L/D ratio). While some improvement in concentricity is seen with an L/D ratio as small as 4/1, preferred ratios are at least 10/1, while most preferred ratios are at least 20/1. Effective lengths and corresponding effective diameters can be determined for other conductor shapes by routine investigation.

With the transport conductor being able to bring the melt flow streams back to a concentric relationship, concentricity at the output of the encapsulator is thus no longer critical. Furthermore, encapsulation of the sensitive VDC copolymer in an encapsulator mounted to the extruder enables the use of the transport conductor in order to achieve the concentricity provided in an appropriately designed transport means. Thus the combinatin of (i) the early encapsulation at or near the extruder and (ii) use of the elongated transport conductor after encapsulation, tends automatically to correct any non-concentricity which may exist in the composite melt stream 34 as it leaves the encapsulator 20. The combination automatically adapts for processing changes and polymer changes, so long as the required viscosity relationships are observed. The longer the transport conductor, of course, the greater its versatility in adapting to change. However, since flow resistance increases with length, generally L/D ratios as for a pipe do not exceed about 100/1. Nevertheless, the transport conductor automatically corrects deficiencies in non-concentricity of the composite melt stream, within the capability provided by its length and symmetry, more or less independently of the processing conditions and the polymer compositions. The transport conductor is thus a means for providing improved concentricity to the encapsulated composite melt stream before it enters the die 42.

The longer the transport conductor, of course, the more flexibility the layout designer has in positioning extruders relative to die 42. The FIGURE 1 layout is, of course, quite simple. More typical is a layout for feeding several extruders into a die which produces a coextruded film having up to seven, or even more, layers. Such a layout is shown diagrammatically in FIGURE 1A, where three extruders 60, in addition to extruders 10 and 14 are feeding into a more complex multi-manifold die 42A. FIGURE 1A clearly illustrates the advantage of being able to move extruder 10 away from die 42A to avoid congestion. The freedom so to move the extruder 10 is a direct result of the early encapsulation of melt stream 12 at the exit of extruder 10. FIGURE 1A also illustrates that the composite melt stream 34 from the encapsulator 20 can be fed into a feedblock 62 to be combined with another melt stream before entering the die.

Another advantage of using the transport conductor, as at transfer pipe 36, is that it allows the user to feed the composite melt stream 34 into any manifold 43 of a multi-manifold die, such as the die 42A. 43A, 43B and 43C in FIGURE 1A indicate three manifolds of the die 42A in FIGURE 1A. Manifolds 43A and 43B are fed directly by transfer pipes 37A and 37B. Manifold 43C is fed by the feedblock 62 which is fed by feed pipes 36 and 37C.

Where the extrusion processing equipment as in FIGURE 1A is desirably used to produce a variety of coextruded film structures, another advantage of the use of transfer pipe 36, in connection with the heat sensitive melt stream 12, is that the composite melt stream 34 can be fed to any of the die manifolds. For example, melt stream 34 may be fed to manifold 43C, as through feedblock 62 as shown in FIGURE 1A to produce a first film structure. After the desired amount of the first structure has been produced, the process may be shut down, and transfer pipe 36 then moved to feed into manifold 43B, as indicated by the dashed outline in FIGURE 1A. An appropriate feed or plug is put into the vacated port in feedblock 62. Feed pipe 37B is repositioned as appropriate. The equipment can then be started up again, with the new melt stream feed arrangement, thus producing a different film layer structuring.

Thus the use of transfer pipe 36 between encapsulator 20 and the multi-manifold die 42A allows the sensitive melt stream 12 to be fed into any one of the die manifolds. This gives the user the freedom to put the layer produced by the sensitive polymer melt stream at virtually any location in the film structure, such that the sensitive layer may be positioned near the center of the film, or toward either surface, where the die contains at least three manifolds. Thus, the use of transfer pipe 36 enables the production of a wide variety of film structures with movement of only the transfer pipe 36. In a conventional alternative, and where the encapsulator is mounted to both the die and its respective extruder, no corresponding movement to a different die manifold can readily be achieved.

It is contemplated that the composition of the sensitive melt stream will generally comprise a vinylidene chloride copolymer. However, a variety of vinylidene chloride copolymers are known and used. So the sensitive polymer compositions may differ in the different film structures which can advantageously be made with this invention. Accordingly, when a multi-manifold die is used, and the transfer pipe 36 is moved among the die manifolds to feed the sensitive polymer composition to the different manifolds to produce different film structures, different ones of the sensitive polymer compositions can be selected, especially according to the properties desired in the film structures. Corresponding differences in encapsulation polymer compositions are also contemplated.

In each structure, and irrespective of which manifold receives the encapsulated sensitive polymer, the sensitive polymer layer in the film structure does have layers of the encapsulating polymer on both of its surfaces.

The encapsulation process of this invention is advantageous for use with any material which is sensitive to the processing parameters to be used. This can facilitate the coextrusion, for example, of materials having disparate extrusion temperatures where the more heat tolerant material comprises melt stream 16. In this case melt stream 16 serves as a thermal cushion with respect to melt stream 12.

This invention is especially useful in the extrusion of polymers which are sensitive to exposure to metal at the high temperatures which are used in extrusion processing. For example, vinylidene chloride copolymers are sensitive to exposure to high temperature over a prolonged period of time of more than a few seconds, and especially when they are concurrently exposed to the metal surfaces of the processing equipment.

Extrusion processing of such materials as vinylidene chloride vinyl chloride copolymer and vinylidene chloride methylacrylate copolymer are known to require periodic shut downs because of polymer degradation, with corresponding disassembly and cleaning of the processing equipment. These costly procedures are required even though the extruder processing the vinylidene chloride copolymer typically is arranged to feed directly into the die without an intervening transfer pipe. Using the processes of the invention, the sensitive vinylidene chloride copolymer is processed in extruder 10 to produce melt stream 12, and is encapsulated preferably right at the extruder exit, whereby its time of exposure to high temperature in combination with die metal contact is minimized. Once the sensitive vinylidene chloride copolymer is encapsulated by the less sensitive material of melt stream 16, its exposure to the metal surfaces of the processing equipment is, of course, essentially eliminated. The sensitivity of a given material may be respective to all extrusion processing, as with the vinylidene chloride copolymers, or it may pertain, for example, to disparate extrusion processing of different materials. Thus the encapsulation process can enable the coextrusion processing of some materials which cannot normally be coextruded; and wherein the more heat tolerant material serves, in melt stream 16, as a thermal cushion for the more heat sensitive material in melt stream 12.

The benefits of this invention are especially seen to apply when the material in the first melt stream 12 is a vinylidene chloride copolymer. Copolymers comprising comonomers of vinyl chloride and methylacrylate will benefit most since they are now in more common use. However, the other sensitive ones of the vinylidene chloride copolymer family will also be benefitted by use of this invention.

The encapsulator 20 is relatively simple in design, and is economically fabricated with conventional turning and boring equipment. The crosshead design for distributing melt stream 16 is especially simple and straightforward. With respect to fabrication of thinner section sheets, the central bore 24 is seen as an element in the combining of melt streams to make a non-annular article, such as sheet 44.

Turning now to FIGURE 2, as the melt stream 16 enters the crosshead channel 30, it splits into two stream components and flows around mandrel 22 in radially opposite directions. Portions of those stream components meet on the opposite side of the crosshead channel 30 from passage 28, forming weld line 64. While weld line 64 has only a modest effect on the functional properties of the sheet material 44, in general it is usually preferred that weld line 44 be omitted from that portion of the sheet material which it is anticipated will be used. Thus, the location whereat the melt stream 16 is fed into the crosshead mandrel 22 is oriented, relative to die 42 such that the weld line 64 passes through the die 42 in an orientation advantageous for trimming off the weld line in a process subsequent to fabrication of the sheet article 44. Such a process is seen at cutters 56 which are shown trimming the sheet in a converting process which is practiced immediately after fabrication of the sheet. The trimming could, of course, be performed at a later time.

As seen in FIGURE 1, the second melt stream 16 is fed into the encapsulator 20 essentially radially opposite an edge 66 of the die 42, considered in light of a central axis (not shown) which passes through encapsulator 20, pipe 36 and die 42. The location of the feed passage 28, and thus the weld line 64 is angularly oriented relative to the die 42, when encapsulator 20 is mounted to the extruder 10. That orientation can be changed by detaching the encapsulator 20 from the extruder 10, rotating it about its longitudinal axis to the desired angular orientation, and remounting it to the extruder 10. Such an alternate positioning of inlet 28 is shown in FIGURE 3, in dashed outline of the corresponding positioning of conduit 18A. The corresponding weld line is shown as a dashed line at 64A in FIGURE 1. If desired, a rotatable fluid coupling could also be employed.

The sheet materials of this invention can readily be fabricated into packages by any process which could be used for conventional sheet material of similar compositions and layer thicknesses but made without utilizing this invention. An example of such packages is the pouch 66 seen in FIGURE 7, which is comprised of facing portions of sheet material 44 made according to the invention and heat sealed to each other about contiguous edge portions thereof to make a pouch closed on three sides and open on the fourth side to receive a product.

### EXAMPLE

A three layer film comprising a core layer of vinylidene chloride methylacrylate copolymer and outer layers of ethylene vinyl acetate copolymer was fabricated. A first polymeric composition comprising vinylidene chloride methylacrylate copolymer was plasticated in a first extruder to form a first polymeric melt stream. A second composition of ethylene vinyl acetate copolymer (EVA) was plasticated in a second extruder to form a second polymeric melt stream. The vinylidene chloride methylacrylate copolymer was Dow 119, having a viscosity at 150°C and shear rate of 10 sec.-1 of about 2.7 x 10⁴ poise (2.7 x 10³ Pa.s). The ethylene vinyl acetate copolymer was Exxon LD-761, having a viscosity of about 1.6 x 10⁴ poise (1.6 x 10³ Pa.s) at 180°C and shear rate of 10 sec.-1. The temperature at the outlet of the first extruder was 153°C. The temperature at the outlet of the second (EVA) extruder was 180°C. The melt stream of vinylidene chloride copolymer was fed through the central bore of a crosshead encapsulator mounted to the exit end of its extruder. The melt stream of EVA was fed through a crosshead mandrel of the encapsulator and joined to the first melt stream, as an outer, encapsulating layer, to make the composite melt stream as seen at 34 in FIGURE 2. The feed location in the crosshead mandrel was axially opposite an edge of the slot die. The composite melt stream was fed from the encapsulator through a 0.625-inch (1.6 cm) inside diameter round pipe 42 inches (107 cm) long, to a slot die. The melt stream was fabricated, in the die into a sheet approximately 54 inches (137 cm) wide by about 2 mils (0.051 mm) thick. Three inches (7.6 cm) of edge trim were taken off each side, and included trimming off the weld line, leaving a finished sheet 48 inches (122 cm) wide, with no weld line, and with all three layers reaching both edges of the film. the outer layers were each about 0.01 mil (2.5 x 10⁻⁴ mm) thick. The outer layers were continuous and of uniform thickness. The balance of the thickness of the film comprised the core layer of vinylidene chloride copolymer.

Thus the invention provides methods for fabricating multiple layer sheet material containing sensitive polymers while preserving the choice of where to locate the extruder which processes the sensitive polymer.

The invention also provides novel apparatus for so fabricating such sheet materials.

The invention further provides such novel apparatus at economical cost, and wherein the novel equipment is readily fabricated at economical cost.

The invention still further provides novel combinations of equipment to carry out the methods of the invention, in fabrication of novel sheet materials, and packages made therewith.

Those skilled in the art will now see that certain modifications can be made to the apparatus and methods, and the resulting films and packages, herein disclosed with respect to the preferred embodiments, without departing from the spirit of the instant invention.

And while the invention has been described above with respect to its preferred embodiments, it will be understood that the invention is capable of numerous rearrangements, modifications and alterations and all such arrangements, modifications and alternations are intended to be within the scope of the appended claims.

## Claims

1. A method for producing a plurality of coextruded film structures with an extrusion apparatus, comprising:
(a) producing a first film structure by (i) plasticating a first sensitive polymeric composition in a first plasticating apparatus (10) and producing a first polymeric melt stream (12), (ii) plasticating a second, less-sensitive polymeric composition in a second plasticating apparatus (14) and producing a second polymeric melt stream (16), (iii) encapsulating the first melt stream in the second melt stream to create a first composite melt stream (32), (iv) feeding the first composite melt stream (32) to a first manifold (e.g. 43C) in a multi-manifold die (42A), through a transport means (36) connected to the first manifold, whereby the first film structure is produced at the multi-manifold die; characterised in that the transport means (36) has a length/inner cross-section ratio of at least 4/1 so as to reduce any thickness variations of at least 10% in the second melt stream about the circumference of the combined melt streams, and in that the method further comprises
(b) shutting down production of the first film structure;
(c) disconnecting the transport means (36) from the first manifold of the die (42A), and connecting it to a second manifold (e.g. 43B) of the multi-manifold die (42), without moving the first plasticating means (10); and
(d) producing a second film structure by (i) plasticating a sensitive polymeric composition in the first plasticating apparatus and producing a first polymeric melt stream (12), (ii) plasticating a second less-sensitive polymeric composition in a second plasticating apparatus and producing a second polymeric melt stream (16), (iii) encapsulating the first melt stream in the second melt stream to create a second composite melt stream (34), (iv) feeding the second composite melt stream (34) to the second manifold (43B) in the multi-manifold die (42A), through the transport means (36), whereby the second film structure is produced at the multi-manifold die, the compositions of the layers in the second film structure differing from the compositions of corresponding layers in the first film structure.

2. A method according to claim 1, wherein the sensitive polymeric compositions in steps (a) and (d) are different.

3. A method according to claim 1 or claim 2, wherein the sensitive polymeric compositions employed in steps (a) and (d) both comprise vinylidene chloride copolymers.

4. A method as claimed in any preceding claim wherein the transport means is a pipe of substantially circular cross-section.

5. A method as claimed in claim 4 wherein the ratio of the pipe length to its inner diameter (L/D ratio) is at least 10/1.

6. A method as claimed in claim 5 wherein the L/D ratio is at least 20/1.

7. A method as claimed in any preceding claim wherein thickness variations of at least 20% are reduced.

8. A method as claimed in any preceding claim wherein said variations in thickness are reduced by at least 75% from the thickest portion of the melt stream to the thinnest portion.

9. A method as claimed in claim 8 wherein said variations are reduced by at least 90%.

10. A method as claimed in any preceding claim wherein the viscosity of the melt stream 16 is at least 20% less than the viscosity of the melt stream 12.

## Patentansprüche

1. Verfahren zum Herstellen einer Vielzahl von zusammen gespritzten Filmstrukturen mit einem Spritzgerät mit
(a) einem Herstellen einer ersten Filmstruktur durch (i) Plastizieren einer ersten sensitiven Polymerverbindung bzw. -zusammensetzung in einem ersten Plastiziergerät (10) und Herstellen eines ersten Polymerschmelzstroms (12), (ii) Plastizieren einer zweiten, weniger sensitiven Polymerverbindung in einem zweiten Plastiziergerät (14) und Herstellen eines zweiten Polymerschmelzstroms (16), (iii) Einhüllen des ersten Schmelzstroms in den zweiten Schmelzstrom, um einen ersten zusammengesetzten Schmelzstrom (32) zu schaffen, (iv) Einspeisen des ersten zusammengesetzten Schmelzstroms (32) in einen ersten Verteiler (z.B. 43C) in einer Mehrfachverteilerform (42A) durch eine Transporteinrichtung (36), die an den ersten Verteiler angeschlossen ist, wobei die erste Filmstruktur an der Mehrfachverteilerform hergestellt wird,
dadurch gekennzeichnet, daß
die Transporteinrichtung (36) ein Längen/Innenquerschnitts-Verhältnis von mindestens 4/1 besitzt, um so jegliche Dickenänderungen von mindestens 10% im zweiten Schmelzstrom am Umfang der zusammengesetzten Schmelzströme zu reduzieren, und das Verfahren weiterhin umfaßt
(b) ein Unterbrechen der Herstellung der ersten Filmstruktur,
(c) ein Abtrennen der Transporteinrichtung (36) vom ersten Verteiler der Form (42A) und deren Anschließen an einen zweiten Verteiler (z.B. 43B) der Mehrfachverteilerform (42) ohne Bewegen der ersten Plastiziereinrichtung (10) und
(d) ein Herstellen einer zweiten Filmstruktur durch (i) Plastizieren einer sensitiven Polymerverbindung im ersten Plastiziergerät und Herstellen eines ersten Polymerschmelzstroms (12), (ii) Plastizieren einer zweiten weniger sensitiven Polymerverbindung in einem zweiten Plastiziergerät und Herstellen eines zweiten Polymerschmelzstroms (16), (iii) Einhüllen des ersten Schmelzstroms in den zweiten Schmelzstrom, um einen zweiten zusammengesetzten Schmelzstrom (34) zu schaffen (iv) Einspeisen des zweiten zusammengesetzten Schmelzstroms (34) in den zweiten Verteiler (43B) in der Mehrfachverteilerform (42A) durch die Transporteinrichtung (36), wobei die zweite Filmstruktur an der Mehrfachverteilerform hergestellt wird, und sich die Zusammensetzungen der Schichten in der zweiten Filmstruktur von den Zusammensetzungen der entsprechenden Schichten in der ersten Filmstruktur unterscheiden.

2. Verfahren gemäß Anspruch 1, wobei sich die sensitiven Polymerverbindungen in den Schritten (a) und (d) unterscheiden.

3. Verfahren gemäß Anspruch 1 oder 2, wobei die in den Schritten (a) und (d) eingesetzten sensitiven Polymerverbindungen beide Vinylidenchlorid-Copolymere enthalten.

4. Verfahren gemäß einem der vorhergehenden Ansprüche, wobei die Transporteinrichtung aus einer Rohrleitung mit im wesentlichen rundem Querschnitt besteht.

5. Verfahren gemaß Anspruch 4, wobei das Verhältnis der Länge der Rohrleitung zu deren Innendurchmesser (L/D-Verhältnis) mindestens 10/1 beträgt.

6. Verfahren gemäß Anspruch 5, wobei das L/D-Verhältnis mindestens 20/1 beträgt.

7. Verfahren gemäß einem der vorhergehenden Ansprüche, wobei die Dickenänderungen von mindestens 20% reduziert werden.

8. Verfahren gemäß einem der vorhergehenden Ansprüche, wobei die Dickenänderungen vom dicksten Abschnitt des Schmelzstroms zum dünnsten Abschnitt um mindestens 75% reduziert werden.

9. Verfahren gemäß Anspruch 8, wobei die Änderungen um mindestens 90% reduziert werden.

10. Verfahren gemäß einem der vorhergehenden Ansprüche, wobei die Viskosität des Schmelzstroms (16) um mindestens 20% geringer ist als die Viskosität des Schmelzstroms (12).

## Revendications

1. Procédé de fabrication de plusieurs structures de films coextrudées avec un équipement d'extrusion, consistant à :
(a) fabriquer une première structure de film en (i) plastifiant une première composition polymère sensible dans un premier équipement plastifiant (10) et produire un premier flux de matière fondue polymère (12), (ii) plastifier une deuxième composition polymère moins sensible dans un deuxième équipement plastifiant (14) et produire un deuxième flux de matière fondue polymère (16), (iii) encapsuler le premier flux de matière fondue dans le deuxième flux de matière fondue pour créer un premier flux de matière fondue composite (32), (iv) amener le premier flux de matière fondue composite (32) vers un premier collecteur (par exemple, 43C) d'une filière à collecteurs multiples (42A), via des moyens de transport (36) connectés au premier collecteur, ce qui permet d'obtenir la première structure de film au niveau de la filière à collecteurs multiples ; caractérisé en ce que les moyens de transport (36) ont un rapport longueur/section interne d'au moins 4/1 de manière à réduire toutes les variations d'épaisseur d'au moins 10% dans le deuxième flux de matière fondue autour de la circonférence des flux de matières fondues combinés et en ce que le procédé consiste en outre à
(b) arrêter la production de la première structure de film ;
(c) déconnecter le moyen de transport (36) du premier collecteur de la filière (42A), et le connecter à un deuxième collecteur (par exemple, 43B) de la filière à collecteurs multiples (42), sans déplacer les premiers moyens de plastification (10) et
(d) fabriquer une deuxième structure de film en (i) plastifiant une composition polymère sensible dans le premier équipement plastifiant et produire un premier flux de matière fondue polymère (12), (ii) en plastifiant une deuxième composition polymère moins sensible dans un deuxième équipement plastifiant pour obtenir un deuxième flux de matière fondue polymère (16), (iii) en encapsulant le premier flux de matière fondue dans le deuxième flux de matière fondue pour créer un deuxième flux de matière fondue composite (34), (iv) en amenant le deuxième flux de matière fondue composite (34) vers le deuxième collecteur (43B) de la filière à collecteurs multiples (42A), par l'intermédiaire des moyens de transport (36), ce qui permet d'obtenir la deuxième structure de film au niveau de la filière à collecteurs multiples, les compositions des couches dans la deuxième structure de film différant des compositions des couches correspondantes dans la première structure de film.

2. Procédé selon la revendication 1, dans lequel les compositions polymères sensibles dans les étapes (a) et (d) sont différentes.

3. Procédé selon la revendication 1 ou la revendication 2, dans lequel les compositions polymères sensibles utilisées dans les étapes (a) et (d) comprennent toutes deux des copolymères de chlorure de vinylidène.

4. Procédé selon l'une quelconque des revendications qui précèdent, dans lequel les moyens de transports sont un tuyau de section substantiellement circulaire.

5. Procédé selon la revendication 4, dans lequel le rapport de longueur du tuyau à son diamètre interne (rapport L/D) est d'au moins 10/1.

6. Procédé selon la revendication 5, dans lequel le rapport L/D est d'au moins 20/1.

7. Procédé selon l'une quelconque des revendications qui précèdent, dans lequel des variations d'épaisseur d'au moins 20% sont réduites.

8. Procédé selon l'une quelconque des revendications qui précèdent, dans lequel lesdites variations d'épaisseur sont réduites d'au moins 75% de la partie la plus épaisse du flux de matière fondue jusqu'à la partie la plus mince.

9. Procédé selon la revendication 8, dans lequel lesdites variations sont réduites d'au moins 90%.

10. Procédé selon l'une quelconque des revendications qui précèdent, dans lequel la viscosité du flux de matière fondue 16 est d'au moins 20% inférieure à la viscosité du flux de matière fondue 12.
